# EUROPEAN PATENT APPLICATION

(11) **EP 3 882 862 A1**
(43) Date of publication of application: **22.09.2021**
(21) Application number: 19883796.5
(22) Date of filing: 05.11.2019
(51) Int. Cl.: G06T 15/00, A63F 13/52

(54) **PICTURE RENDERING METHOD AND APPARATUS, AND STORAGE MEDIUM AND ELECTRONIC APPARATUS**

(30) Priority: 15.11.2018 CN 201811371864
(71) Applicant: Tencent Technology (Shenzhen) Company Limited, Shenzen, Guangdong 518057 (CN)
(72) Inventor: ZHANG, Huaitao, Shenzhen, Guangdong 518057 (CN)
(74) Representative: Eisenführ Speiser
(86) International application number: PCT/CN2019/115610
(87) International publication number: WO 2020/098530

(57) **Abstract**

Disclosed are a picture rendering method and apparatus, and a storage medium and an electronic apparatus. The method comprises: acquiring a target picture to be rendered in a two-dimensional virtual scene, wherein the target picture includes a background picture and a character object that moves on the background picture, and the background picture comprises a target object located at a fixed position; using depth migration indicated in a depth map corresponding to the target object to determine a first depth value corresponding to pixel points on the target object in the background picture, wherein the depth map records depth migration of each of the pixel points on the target object; acquiring a second depth value corresponding to the pixel points on the character object that moves to a target display position; and rendering the target picture according to the first depth value and the second depth value. The present application solves the technical problem in the related art of relatively low accuracy in rendering two-dimensional picture information.

## Description

### RELATED APPLICATION

This application claims priority to Chinese Patent Application No. 201811371864.9, entitled "METHOD AND APPARATUS FOR RENDERING IMAGE, STORAGE MEDIUM, AND ELECTRONIC DEVICE" and filed with the China Nation Intellectual Property Agency on November 15, 2018, which is incorporated herein by reference in its entirety.

### FIELD OF THE TECHNOLOGY

This application relates to the technical field of computer vision, and specifically, to image rendering technology.

### BACKGROUND OF THE DISCLOSURE

Generally, a two-dimensional (2D) virtual scene merely carries 2D image information of itself. Therefore, virtual objects included in an image are usually rendered in a following manner. During rendering virtual objects, a virtual object is processed to be semitransparent in case of being blocked by another virtual object. Thereby, a blocking relationship between the virtual objects is simulated in the 2D virtual scene.

### SUMMARY

A method and an apparatus for rendering an image, a storage medium, and an electronic device are provided according to embodiments of the present disclosure, so as to address at least a technical problem of low accuracy of rendering 2D image information in conventional technology.

A method for rendering an image is provided in an aspect of embodiments of the present disclosure. The method is applied to an image processing device, and includes: obtaining a target image to be rendered in a 2D virtual scene, where the target image includes a background image and a character object moving in the background image, and the background image includes a target object located at a fixed position; determining a first depth value corresponding to a pixel on the target object in the background image, based on a depth offset indicated in a depth map corresponding to the target object, where the depth map records a depth offset of each pixel on the target object; obtaining a second depth value corresponding to a pixel on the character object moving to a target display position; and rendering the target image according to the first depth value and the second depth value.

An apparatus for rendering an image is provided in another aspect of embodiments of the present disclosure. The apparatus includes: a first determination unit, configured to obtain a target image to be rendered in a 2D virtual scene, where the target image includes a background image and a character object moving in the background image, and the background image includes a target object located at a fixed position; a second determination unit, configured to determine a first depth value corresponding to a pixel on the target object in the background image, based on a depth offset indicated in a depth map corresponding to the target object, where the depth map records a depth offset of each pixel on the target object; an obtaining unit, configured to obtain a second depth value corresponding to a pixel on the character object moving to a target display position; and a rendering unit, configured to render the target image according to the first depth value and the second depth value.

In an optional embodiment, the apparatus further includes: a third determination unit, configured to determine a ground line at which the target object in the background image connects a ground presented in the 2D virtual scene, before the first depth value corresponding to the pixel on the target object in the background image is determined based on the depth offset indicated in the depth map corresponding to the target object; a fourth determination unit, configured to determine the depth offset of the pixel on the target object according to a distance of projecting the pixel on the target object onto the ground line; and a generation unit, configured to generate the depth map based on the depth offset.

A storage medium is further provided in another aspect of embodiments of the present disclosure. The storage medium stores a computer program, and the computer program when being executed performs the foregoing method for rendering the image.

An electronic device is further provided in another aspect of embodiments of the present disclosure. The electronic device includes a memory, a processor, and a computer program that is stored in the memory and executable on the processor, where the processor performs the foregoing method for rendering the image through the computer program.

A computer program product is further provided in another aspect of embodiments of the present disclosure. The computer program product includes instructions, where the instructions when executed by a computer configure the computer to perform the foregoing method for rendering the image.

In embodiments of the present disclosure, the first depth value corresponding to the pixel on the target object in the background image is determined based on the depth offset indicated in the depth map corresponding to the target object, after the target image to be rendered for the 2D virtual scene is obtained. Then, the second depth value corresponding to the pixel on the character object moving to the target display position is obtained. Finally, the target image is rendered according to the first depth value and the second depth value. In this method, after the background image is obtained, whether to render the pixel on the character object may be determined according to the first depth value at the target object in the background image and the second depth value of the pixel on the character object. Thereby, it is obvious which layers the character object and the target object are located in the background image, and there is a clear blocking relationship between the character object and the target object. It is ensured that the background image and the character object can still be accurately rendered when there is blockage between the target object in the background image and the character object not belong to the background image, which improves accuracy of the rendering. Hence, addressed is the technical issue of low accuracy of rendering 2D image information in conventional technology.

### BRIEF DESCRIPTION OF THE DRAWINGS

The accompanying drawings described herein are used to provide a further understanding of the present disclosure, and serve as a part of the present disclosure. Exemplary embodiments of the present disclosure and descriptions thereof are used to explain the present disclosure, and do not constitute any inappropriate limitation to the present disclosure.
Figure 1 is a schematic diagram of an application environment of a method for rendering an image according to an embodiment of the present disclosure;
Figure 2 is a schematic flowchart of a method for rendering an image according to an embodiment of the present disclosure;
Figure 3 is a schematic diagram of a method for rendering an image according to an embodiment of the present disclosure;
Figure 4 is a schematic diagram of another method for rendering an image according to an embodiment of the present disclosure;
Figure 5 is a schematic diagram of another method for rendering an image according to an embodiment of the present disclosure;
Figure 6 is a schematic diagram of another method for rendering an image according to an embodiment of the present disclosure;
Figure 7 is a schematic diagram of another method for rendering an image according to an embodiment of the present disclosure;
Figure 8 is a schematic diagram of another method for rendering an image according to an embodiment of the present disclosure;
Figure 9 is a schematic structural diagram of an apparatus for rendering an image according to an embodiment of the present disclosure; and
Figure 10 is a schematic structural diagram of an electronic device according to an embodiment of the present disclosure.

### DESCRIPTION OF EMBODIMENTS

In order to help those skilled in the art better understand solutions of the present disclosure, hereinafter technical solutions in embodiments of the present disclosure are described clearly and completely in conjunction with the drawings in embodiments of the present closure. Apparently, the described embodiments are only some rather than all of the embodiments of the present disclosure. Any other embodiments obtained based on the embodiments of the present disclosure by those skilled in the art without any creative effort fall within the scope of protection of the present disclosure.

The terms such as "first" and "second" in the specification, claims, and the accompanying drawings of the present disclosure that are intended to distinguish between similar objects, but are not necessarily used for describing a specific sequence or a chronological order. It is to be understood that the data termed in such a way are interchangeable in proper circumstances, so that the embodiments of the present disclosure described herein can be implemented in other orders than the order illustrated or described herein. In addition, the terms "include" and "comprise" and any other variants are intended to cover the non-exclusive inclusion. For example, a process, method, system, product, or device that includes a list of steps or units is not necessarily limited to the expressly listed steps or units, but may include other steps or units not expressly listed or inherent to such process, method, product, or device.

A method for rendering an image is provided in an aspect of embodiments of the present disclosure. The method may be applied to an image processing device, for example, a terminal device or a server. The method may be applied to the terminal device. For example, the terminal device may be equipment such as a smart terminal, a computer, a personal digital assistant (PDA), a tablet computer, or the like. Alternatively, the method may be applied to the server. The server may be an independent server or a server in a cluster.

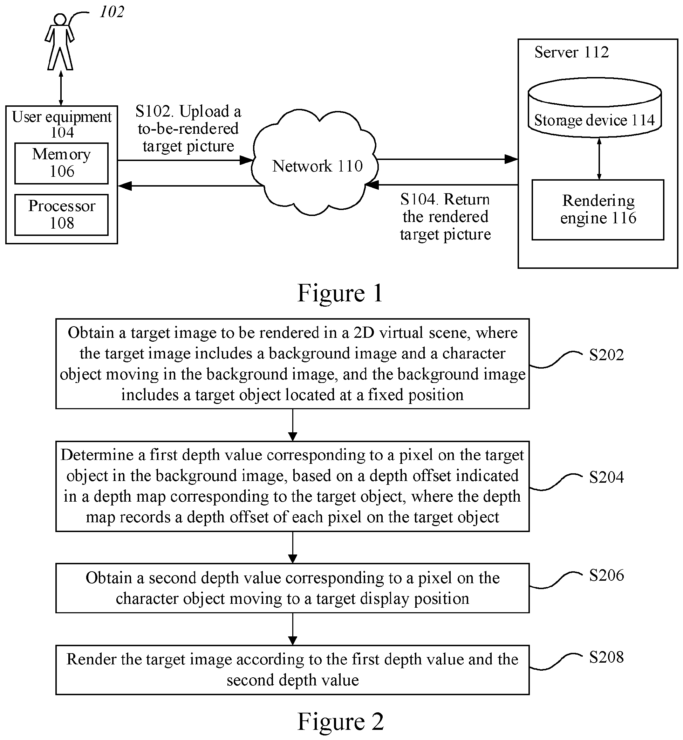

In an optional embodiment, the method for rendering the image may be applied, but not limited, to an environment as shown in Figure 1. Reference is made to Figure 1, which is a schematic diagram of an application environment of a method for rendering an image according to an embodiment of the present disclosure. As shown in Figure 1, a user 102 may exchange data with user equipment 104. The user equipment 104 includes a memory 106 and a processor 108. The memory 106 is configured to store a target image that is to be rendered, and the processor 108 is configured to process the exchanged data. The user equipment 104 uploads the to-be-rendered target image to a server 112 via a network 110 in step S102. The server 112 includes a storage device 114 and a rendering engine 116. The storage device 114 is configured to store the to-be-rendered target image and the target image that is rendered. The rendering engine 116 is configured to render the to-be-rendered target image to acquire the rendered target image. After acquiring the rendered target image, the server 112 returns the rendered target image to the user equipment 104 via the network 110 in step S104. The user equipment 104 displays the rendered target image.

In conventional technology, 2D image information is usually rendered in following manners.

A first manner is a "whole scene" manner.

In such manner, a ground and objects are not separate, and are drawn as one image. A character is processed to be semitransparent when being blocked by an object in the scene, so as to indicate the blockage. An advantage is low resource consumption (thus more this manner is more common in early 2D games). A disadvantage is low presentation quality (since semitransparency blurs the character, accuracy of the rendering is reduced).

A second manner is a "separated ground and objects in a scene" manner.

In such method, a ground and scene objects are drawn as independent images, and all objects are sequenced in real time. The objects are drawn in an order from the farthest to the nearest (the painter's algorithm). An advantage is better presentation quality than early solutions. A disadvantage is high consumption (a large amount of resources in an installation package and a memory, a long CPU time consumed by sequencing, and repeated rendering during drawing).

In view of the above, conventional 2D image rendering faces problems of severe distortion or high consumption. In embodiments of the present disclosure, after a background image is obtained, whether to render a pixel on a character object may be determined according to a first depth value at a target object in the background image and a second depth value of the pixel on the character object. Thereby, it is obvious which layers the character object and the target object are located in the background image, and there is a clear blocking relationship between the character object and the target object. It is ensured that the background image and the character object can still be accurately rendered even when there is blockage between the target object in the background image and the character object not belong to the background image, which improves accuracy of the rendering. Further, the background image and the character object are rendered for once, which reduces consumption and saves resources.

Hereinabove the method for rendering the image is applied to the server, which is merely an optional embodiment. The method may be alternatively applied, but is not limited, to a terminal capable of data computation. The network may include, but is not limited to, a wireless network or a wired network. The wireless network includes Wi-Fi or another network implementing wireless communication. The wired network may include, but is not limited to, a wide area network, a metropolitan area network, and a local area network. The server may include, but is not limited to, any hardware device capable of computation.

As an optional embodiment, the terminal device is taken as an example of the image processing device, to illustrate to describe the method for rendering the image. Reference is made to Figure 2, which is a schematic flowchart of a method for rendering an image according to an embodiment of the present disclosure. As shown in Figure 2, a method for rendering an image includes following steps S202 to S208.

In step S202, the terminal device obtains a target image to be rendered in a 2D virtual scene.

The target image includes a background image and a character object moving in the background image. The background image includes a target object located at a fixed position.

In step S204, the terminal device determines a first depth value corresponding to a pixel on the target object in the background image, based on a depth offset indicated in a depth map corresponding to the target object.

The depth map records a depth offset of each pixel on the target object.

In step S206, the terminal device obtains a second depth value corresponding to a pixel on the character object moving to a target display position.

In step S208, the terminal device renders the target image according to the first depth value and the second depth value.

In an optional embodiment, the method for rendering the image may be applied, but not limited, to a process of rendering a game image in a 2D game, or a process of rendering an image in a 2D animation.

Hereinafter illustration is made in conjunction with a case that the method for rendering an image is applied to the process of rendering a game image in a 2D game. The game image of the 2D plane game, after being obtained, serves as a target image that is to be rendered. The to-be-rendered target image includes a background image and a character object moving in the background image. The background image includes a target object located at a fixed position. A first depth value corresponding to a pixel on the target object in the background image and a second depth value of a pixel on a character object are obtained. The target image is rendered according to the first depth value and the second depth value.

In the foregoing process, after obtaining the background image, the terminal device may determine whether to render the pixel on the character object, according to the first depth value on the target object in the background image and the second depth value of the pixel on the character object. Thereby, it is obvious which layers the character object and the target object are located in the background image, and there is a clear blocking relationship between the character object and the target object. It is ensured that the background image and the character object can still be accurately rendered when there is blockage between the target object in the background image and the character object not belong to the background image, which improves accuracy of the rendering.

In an optional embodiment, the terminal device may determine the target object and the character object in the to-be-rendered target image in a manner including, but not limited to, following steps. The terminal device may determine an object that moves between any two consecutive to-be-rendered target images as the character object, and determine an object that does not move as the target object. For example, for two consecutive frames of an image of a 2D animation that are obtained, a position or a shape of an object in the image may change. For example, a character may move. In such case, the object of which the position or the shape changes is determined as the character object. Further, both the position and the shape of an object in the image may not change. For example, neither the position nor the shape of a building changes. In such case, the object of which the position and shape remain unchanged is determined as the target object.

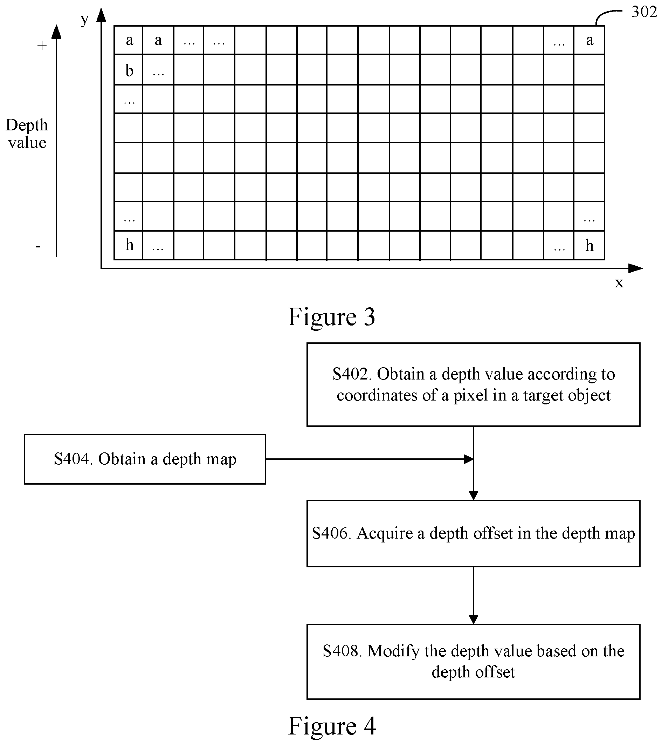

In an optional embodiment, the terminal device may, but is not limited to, determine a depth value for each pixel in the target image. The depth value is configured to represent a stereoscopic distance presented by such pixel. As an example, Figure 3 shows a schematic diagram of a method for rendering an image according to an embodiment of the present disclosure. A target image 302 that is to be rendered is shown in Figure 3. A rectangular coordinate system is established based on a display screen of the terminal, and each pixel in the target image 302 has corresponding coordinates. The depth value of each pixel may be obtained based on an ordinate in the coordinates of such pixel. In Figure 3, in a horizontal direction, the depth values of pixels in each row are the same. In a vertical direction, the depth values of pixels in different rows are a, b, ..., and h, respectively, from top to bottom. The depth value of the pixel increases in the vertical direction from bottom to top. A larger depth value indicates a larger stereoscopic distance presented by the pixel, and a smaller depth value indicates that a smaller stereoscopic distance presented by the pixel.

During rendering, a decreased depth value represents that an image being presented covers a previous image at the pixel, and an increased value of the pixel represents that the image presented at the pixel is unchanged.

In an optional embodiment, after determining the depth value of each pixel in the background image and before determining the first depth value of the pixel of the target object in the background image, the terminal device may further obtain the depth map in a following manner. A ground line at which the target object in the background image connects a ground presented in the 2D virtual scene is determined. The depth offset of the pixel on the target object is determined according to a distance of projecting the pixel on the target object onto the ground line. The depth map is generated based on the depth offset.

In an optional embodiment, the ground line may be, but is not limited to, a junction line between the target object and the ground in the background image. The depth offset may be, but is not limited to, a difference between the depth value of the pixel on the target object and the depth value of a pixel at which the pixel on the target object is projected onto the ground line.

For example, pixel 1 and pixel 2 are located on the target object included in the background image. Pixel 2 is a pixel not located in the ground line, and pixel 2 is projected onto the ground line at pixel 1 in the ground line. The depth value of pixel 1 is, for example, 100, while the depth value of pixel 2 is 150. In such case, a distance of projecting pixel 2 to pixel 1 is 50, and the depth offset of pixel 2 is determined to be 50. Accordingly, the depth map is generated based on the depth offset of each pixel on the target object.

In an optional embodiment, after generating the depth map, the terminal device may, but is not limited to, calculate the first depth value on the target object according to the depth map. As an example, Figure 4 shows a schematic diagram of another method for rendering an image according to an embodiment of the present disclosure. As shown in Figure 4, the terminal device obtains the depth value of a pixel on the target object according to coordinates of the pixel in step S402. Then, the terminal device obtains the depth map in step S404. Since the depth map records the depth offset, the depth offset in the depth map is acquired in step S406. Since the depth value and the depth offset of the pixel are both obtained, the depth value is modified based on the depth offset in step S408, so as to obtain the first depth value of the pixel on the target object.

In an optional embodiment, the terminal device may obtain the second depth value of the pixel on the character object in a following manner. The terminal device obtains the depth value corresponding to a feature pixel at the target position associated with the character object. The terminal device determines the depth value corresponding to the feature pixel as the second depth value of each pixel on the character object.

In an optional embodiment, the feature pixel may be, but is not limited to, a pixel selected from pixels covered by the character object. For example, a lowermost pixel on the character object is obtained as the feature pixel, and the depth value of the lowermost pixel is assigned to each pixel on the character object, so that all pixels on the character object have the same depth value. In such case, the second depth value is equal to the depth value of each pixel on the character object.

In an optional embodiment, after obtaining the first depth value on the target object and the second depth value on the character object, the terminal device may perform rendering in a following manner. The background image is rendered, where the pixel on the target object in the background image is rendered according to the first depth value. Pixels occupied by the character object in the background image are determined, and a first pixel is obtained from the pixels occupied by the character object in the background image (where any pixel occupied by the character object in the background image may serves as the first pixel). Then, following operations are performed. The first pixel on the character object is rendered based on the second depth value, in a case that the first pixel is determined to be not on the target object. The first depth value and the second depth value are compared at the first pixel, to obtain a comparison result, in a case that the first pixel is determined to be on the target object. The comparison result is configured to indicate a blocking relationship between the target object and the character object. The character object is rendered according to the comparison result.

In an optional embodiment, there may be a blocking relationship between the target object and the character object. During rendering, the terminal device first renders the target object, and then renders the character object after rendering of the target object is completed. A part of the character object is normally rendered in a case that such part does not overlap with the target object. A part of the character is subject to following determination in a case that such part overlaps with the target object. In a case that the first depth value is less than the second depth value, it indicates that the target object blocks the character object, so that the overlapping part is not further rendered. In a case that the first depth value is greater than the second depth value, it indicates that the character object blocks the target object, so that the overlapping part is normally rendered as the character object.

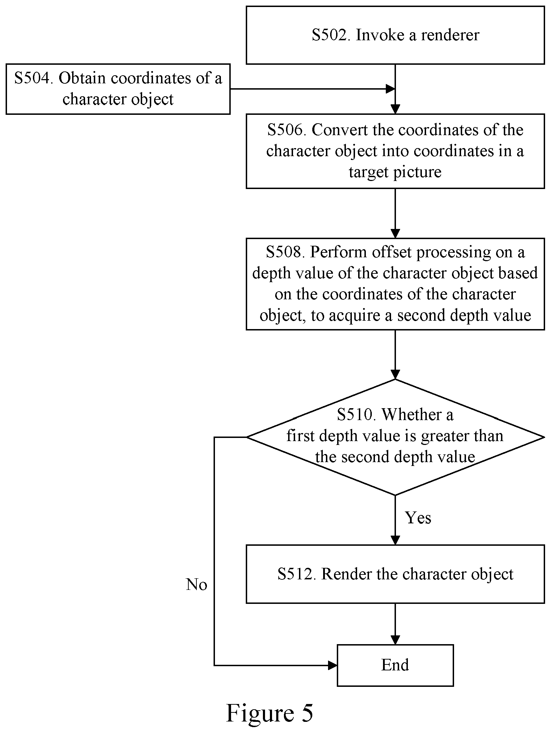

A process of rendering the character object is illustrated in conjunction with Figure 5. Coordinates of a position of the character object may be different in dimensions from the coordinates in the target image. Therefore, the terminal device needs to convert the coordinates of the character object to be compatible with the coordinates in the target image. That is, the coordinates of the character object are converted into coordinates in the 2D rectangular coordinate system established based on the display screen of the terminal. After a renderer is invoked in step S502 and the coordinates of the character object are obtained in step S504, the coordinates of the character object are converted into the coordinates in the 2D rectangular coordinate system established based on the display screen of the terminal in step S506. Then, the depth value of the character object is subject to offset processing based on the coordinates of the character object in step S508, so as to obtain the second depth value. Afterwards, the terminal device compares the first depth value with the second depth value in step S510. In a case that the first depth value is greater than the second depth value, the process goes to S512, where the terminal device renders the part, which overlaps with the target object, of the character object. In a case that the first depth value is less than the second depth value, the terminal device does no render the overlapping part of the character object.

The following method is provided according to embodiments of the present disclosure. The target image to be rendered for the 2D virtual scene is obtained. The first depth value corresponding to the pixel on the target object in the background image is determined based on the depth offset indicated in the depth map corresponding to the target object. The second depth value corresponding to the pixel on the character object moving to the target display position is obtained. The target image is rendered according to the first depth value and the second depth value. In this method, after the background image is obtained, whether to render the pixel on the character object may be determined according to the first depth value at the target object in the background image and the second depth value of the pixel on the character object. Thereby, it is obvious which layers the character object and the target object are located in the background image, and there is a clear blocking relationship between the character object and the target object. It is ensured that the background image and the character object can still be accurately rendered when there is blockage between the target object in the background image and the character object not belong to the background image, which improves accuracy of the rendering.

In an optional embodiment, the terminal device rendering the target image according to the first depth value and the second depth value includes following steps S1 to S5.

In step S1, the background image is rendered. The pixel on the target object in the background image is rendered based on the first depth value.

In step S2, pixels occupied by the character object are determined in the background image, and a first pixel is obtained from the pixels occupied by the character object in the background image. Then, following operations are performed.

In step S3, the first pixel on the character object is rendered based on the second depth value, in a case the first pixel is determined to be not on the target object.

In step S4, the first depth value and the second depth value are compared at the first pixel to obtain a comparison result, in a case that the first pixel is determined to be on the target object. The comparison result is configured to indicate a blocking relationship between the target object and the character object.

In step S5, the character object is rendered according to the comparison result.

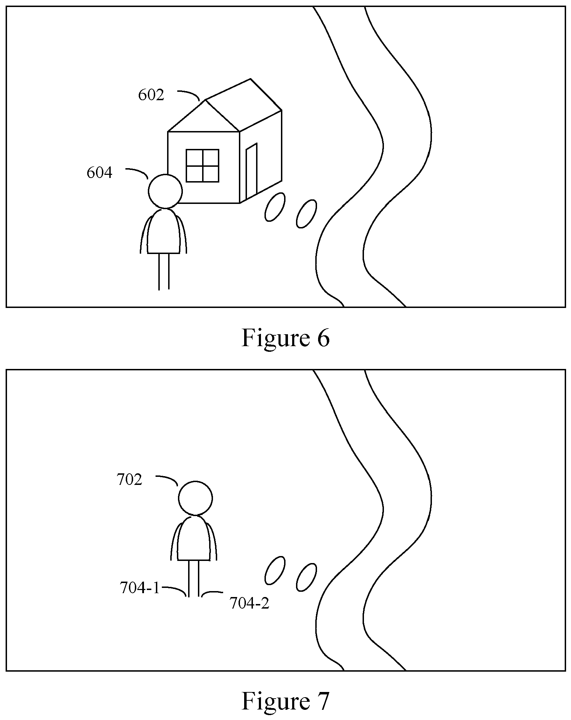

An example is illustrated in conjunction with Figure 6. Reference is made to Figure 6, which is a schematic diagram of another method for rendering an image according to an embodiment of the present disclosure. As shown in Figure 6, the target image includes the target object 602 and the character object 604, as an example. During rendering, the terminal device first renders the background image, and pixels in the target object 602 in the background image are rendered based on the first depth value. Then, the character object 604 is rendered according to the second depth value. Each pixel, which overlaps with the target object 602, on the character object 604 serves as the first pixel sequentially, and the first depth value is compared with the second depth value at such pixel. The second depth value is the depth value of such pixel on the character object 604, and the first depth value is the depth value of such pixel on the target object 602. Therefore, a blocking relationship between the character object 604 and the target object 602 may be obtained after the comparison. Figure 6 shows a case in which the second depth value is less than the first depth value, indicating that the pixel in the character object 604 needs to be rendered. In such case, the image presents that the target object blocks the character object at such pixel.

In this embodiment, the character object is rendered according to the first depth value and the second depth value. Thereby, the blocking relationship between the character object and the target object can be clearly obtained in the rendering, improving accuracy of rendering the target image.

In an optional embodiment, the terminal device rendering the character object according to the comparison result includes following steps S1 and S2.

In step S1, the first pixel is rendered based on the second depth value, in a case that the comparison result indicates the first depth value being greater than the second depth value.

In step S2, the first pixel is not rendered, in a case that the comparison result indicates the first depth value being less than or equal to the second depth value.

As mentioned when describing Figure 3, a larger ordinate of a pixel indicates a larger depth value of such pixel and a larger stereoscopic distance presented by such pixel. Therefore, when the terminal device determines the first depth value and the second depth value and renders the pixels in the character object accordingly, the second depth value is applied to rendering of the character object. The pixel in a part at which the character object and the target object overlap serves as the first pixel, and the first depth value of the first pixel and the second depth value of the first pixel are compared with each other. In a case that the first depth value is less than the second depth value, the first pixel is not further rendered, which indicates that the target object blocks the character object at the first pixel. In a case that the first depth value is greater than the second depth value, the first pixel is further rendered, which indicates that the target object does not block the character object at the first pixel.

In this embodiment, whether to render the character object is determined based on the first depth value and the second depth value. Accuracy of rendering the character object is improved, and thereby accuracy of rendering the target image is improved.

In an optional embodiment, the terminal device rendering the background image includes following steps S1 and S2.

In step S1, depth information stored in a depth buffer corresponding to the background image is acquired. The depth information corresponding to the pixel on the target object includes the first depth value determined based on the depth offset. The depth information corresponding to a ground pixel presenting a ground in the 2D virtual scene includes a third depth value corresponding to the ground pixel.

In step S2, the background image is rendered according to the depth information.

An embodiment is illustrated in conjunction with Figure 3. The terminal device obtains the target image, the target image includes the background image, and the background image includes the target object. A rectangular coordinate system is established based on a screen of the terminal, so that each pixel in the target image has corresponding coordinates. A depth value is set for the each pixel in the target image according to the coordinates. The depth value includes the third depth values of the ground pixels that present the ground, and includes the first depth values of pixels that present the target object, where the first depth values have been subject to depth offset processing. The third depth values and the first depth values are stored into the depth buffer as the depth information. During rendering, the third depth value may be obtained from the depth buffer to render the ground in the target image, and the first depth value may be obtained from the depth buffer to render the target object in the target image.

In this embodiment, the terminal device obtains the depth information in the depth buffer corresponding to the background image, to render the pixels on the target object. Accuracy of rendering the target object is ensured, and thereby the accuracy of rendering the target image is ensured.

In an optional embodiment, before rendering the background image according to the depth information stored in the depth buffer, the terminal device performs following steps S1 to S4.

In step S1, display coordinates on a screen are acquired for each pixel in the background image. Following steps are performed sequentially on second pixels in the background image.

In step S2, a depth of the second pixel is determined based on the display coordinates of the second pixel, where a value of the depth changes along an indicated direction for the depth, and the indicated depth direction is set based on the screen. The depth is determined as an initial depth value of the second pixel.

In step S3, the initial depth value is stored into the depth buffer as the third depth value, in a case that the second pixel is the ground pixel.

In step S4, the initial depth value is updated to be the first depth value, and stored into the depth buffer, in a case that the second pixel is the pixel on the target object.

In an optional embodiment, the depth of which the value changes along the indicated depth direction may be, but is not limited to, an ordinate of the second pixel. The ground pixel may be, but is not limited to, a pixel on an image presenting the ground.

For example, after obtaining display coordinates of each pixel in the background image according to the rectangular coordinate system established based on the display screen of the terminal, the terminal device determines an initial depth value of such pixel according to the ordinate in the display coordinates. In such case, each pixel in the background image is provided with the initial depth value. The initial depth value is stored in the depth buffer as the third depth value, in a case that the pixel is on the image presenting the ground. The initial depth value is updated to be the first depth value, and the first depth value is stored in the depth buffer, in a case that the pixel is on the target object.

In this embodiment, the initial depth value or the first depth value of a pixel is determined according to a position of the pixel, so as to obtain the depth buffer. Accuracy of obtaining the depth buffer is improved, and thereby accuracy of rendering the target image is improved.

In an optional embodiment, the terminal device obtaining the second depth value corresponding to the pixel on the character object moving to the target display position includes following steps S1 and S2.

In step S1, a depth value corresponding to a feature pixel at the target position associated with the character object is acquired.

In step S2, the depth value corresponding to the feature pixel is determined as the second depth value of each pixel on the character object.

In an optional embodiment, the depth value corresponding to the feature pixel at the target position associated with the character object may be, but is not limited to, a depth value of a pixel with a smallest ordinate among the character object. An example is illustrated in conjunction with Figure 7. Reference is made to Figure 7, which is a schematic diagram of another method for rendering an image according to an embodiment of the present disclosure. Figure 7 shows the character object 702 in the target image. A lowermost pixel 704-1 of a right foot and a lowermost pixel 704-2 of a left foot of the character object are points with the smallest ordinate among the character object 702. Since the ordinates of the two pixels are equal, the terminal device obtains a depth value of the lowermost point 704-1 of the right foot or a depth value of the lowermost point 704-2 of the left foot, and determines such depth value as the second depth value of the each pixel on the character object.

In this embodiment, the depth value of the feature pixel is determined as the second depth value of the each pixel on the character object, and thereby whether to render the pixel of the character object can be accurately determined according to the second depth value. Efficiency of rendering the target image is improved.

In an optional embodiment, before determining the first depth value corresponding to the pixel on the target object in the background image, based on the depth offset indicated in the depth map corresponding to the target object, the terminal device performs following steps S1 to S3.

In step S1, a ground line at which the target object in the background image connects the ground presented in the 2D virtual scene is determined.

In step S2, the depth offset of the pixel on the target object is determined based on a distance of projecting the pixel on the target object onto the ground line.

In step S3, the depth map is generated based on the depth offset.

In an optional embodiment, a value the depth offset may be, but is not limited to, greater than or equal to zero.

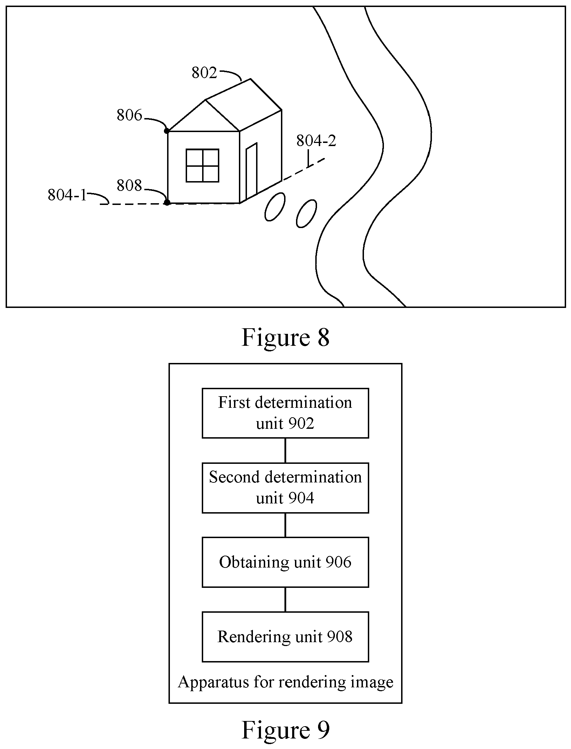

In an optional embodiment, the ground line may be, but not limited to, a junction line between the target object and the ground. An example is illustrated in conjunction with Figure 8. Reference is made to Figure 8, which is a schematic diagram of another method for rendering an image according to an embodiment of the present disclosure. Figure 8 shows the target object 802, and there are junction lines 804-1 and 804-2 between the target object 802 and the ground. A pixel 806 on the target object is vertically projected onto the ground line at a pixel 808 in the ground line. In such case, the distance of projecting the pixel 806 to the pixel 808 is the depth offset. The terminal device obtains the depth offset of the each pixel on the target object, so as to generate the depth map.

In this embodiment, the depth offset is determined based on the distance of projecting the pixel on the target object in the background image onto the ground line. Efficiency and accuracy of generating the depth map is improved, and thereby accuracy of obtaining the first depth value is improved. Accuracy of rendering the target image is improved.

The foregoing method embodiments are illustrated as a series of combined operations to facilitate concise description. Those skilled in the art should appreciate that the present disclosure is not limited to the described sequence of the operations, since some steps in embodiments of the present disclosure may be performed simultaneously or performed in another sequence. Those skilled in the art should further appreciate that all the embodiments described herein are exemplary, and a relevant operation or module may not be necessary to implement the present disclosure.

An apparatus for rendering an image is further provided in another aspect of the present disclosure, for implementing the foregoing method for rendering the image. Reference is made to Figure 9, which is a schematic structural diagram of an apparatus for rendering an image according to an embodiment of the present disclosure. As shown in Figure 9, the apparatus includes a first determination unit 902, a second determination unit 904, an obtaining unit 906, and a rendering unit 908.

The first determination unit 902 is configured to obtain a target image to be rendered in a 2D virtual scene. The target image includes a background image and a character object moving in the background image. The background image includes a target object located at a fixed position.

The second determination unit 904 is configured to determine a first depth value corresponding to a pixel on the target object in the background image, based on a depth offset indicated in a depth map corresponding to the target object. The depth map records a depth offset of each pixel on the target object.

The obtaining unit 906 is configured to obtain a second depth value corresponding to a pixel on the character object moving to a target display position.

The rendering unit 908, configured to the target image according to the first depth value and the second depth value.

In an optional embodiment, the apparatus for rendering the image may be applied, but not limited, to a process of rendering a game image in a 2D game, or a process of rendering an image in a 2D animation.

Hereinafter illustration is made in conjunction with a case that the apparatus for rendering an image is applied to the process of rendering a game image in a 2D game. The game image of the 2D plane game, after being obtained, serves as a target image that is to be rendered. The to-be-rendered target image includes a background image and a character object moving in the background image. The background image includes a target object located at a fixed position. A first depth value corresponding to a pixel on the target object in the background image and a second depth value of a pixel on a character object are obtained. The target image is rendered according to the first depth value and the second depth value.

In the foregoing process, after the background image is obtained, whether to render the pixel on the character object may be determined according to the first depth value on the target object in the background image and the second depth value of the pixel on the character object. Thereby, it is obvious which layers the character object and the target object are located in the background image, and there is a clear blocking relationship between the character object and the target object. It is ensured that the background image and the character object can still be accurately rendered when there is blockage between the target object in the background image and the character object not belong to the background image, which improves accuracy of the rendering.

In an optional embodiment, an object that moves between any two consecutive to-be-rendered target images may be determined as the character object, and an object that does not move may be determined as the target object. The present disclosure is not limited to the above case. As an example, for two consecutive frames of an image of a 2D animation that are obtained, a position or a shape of an object in the image may change. For example, a character may move. In such case, the object of which the position or the shape changes is determined as the character object. Further, both the position and the shape of an object in the image may not change. For example, neither the position nor the shape of a building changes. In such case, the object of which the position and shape remain unchanged is determined as the target object.

In an optional embodiment, a depth value may be determined for each pixel in the target image. The present disclosure is not limited to the above case. The depth value is configured to represent a stereoscopic distance presented by such pixel. As an example, Figure 3 shows a schematic diagram of a method for rendering an image according to an embodiment of the present disclosure. A target image 302 that is to be rendered is shown in Figure 3. A rectangular coordinate system is established based on a display screen of the terminal, and each pixel in the target image 302 has corresponding coordinates. The depth value of each pixel may be obtained based on an ordinate in the coordinates of such pixel. In Figure 3, in a horizontal direction, the depth values of pixels in each row are the same. In a vertical direction, the depth values of pixels in different rows are a, b, ..., and h, respectively, from top to bottom. The depth value of the pixel increases in the vertical direction from bottom to top. A larger depth value indicates a larger stereoscopic distance presented by the pixel, and a smaller depth value indicates that a smaller stereoscopic distance presented by the pixel.

During rendering, a decreased depth value represents that an image being presented covers a previous image at the pixel, and an increased value of the pixel represents that the image presented at the pixel is unchanged.

In an optional embodiment, after the depth value of each pixel in the background image is determined and before the first depth value of the pixel of the target object in the background image is determined, the depth map may be obtained in a following manner. A ground line at which the target object in the background image connects a ground presented in the 2D virtual scene is determined. The depth offset of the pixel on the target object is determined according to a distance of projecting the pixel on the target object onto the ground line. The depth map is generated based on the depth offset.

In an optional embodiment, the ground line may be, but not is limited to, a junction line between the target object and the ground in the background image. The depth offset may be, but is not limited to, a difference between the depth value of the pixel on the target object and the depth value of a pixel at which the pixel on the target object is projected onto the ground line.

For example, pixel 1 and pixel 2 are located on the target object included in the background image. Pixel 2 is a pixel not located in the ground line, and pixel 2 is projected onto the ground line at pixel 1 in the ground line. The depth value of pixel 1 is, for example, 100, while the depth value of pixel 2 is 150. In such case, a distance of projecting pixel 2 to pixel 1 is 50, and the depth offset of pixel 2 is determined to be 50. Accordingly, the depth map is generated based on the depth offset of each pixel on the target object.

In an optional embodiment, after the depth map is generated, the first depth value on the target object may, but is not limited to, be calculated according to the depth map. As an example, Figure 4 shows a schematic diagram of another method for rendering an image according to an embodiment of the present disclosure. As shown in Figure 4, the terminal device obtains the depth value of a pixel on the target object according to coordinates of the pixel in step S402. Then, the terminal device obtains the depth map in step S404. Since the depth map records the depth offset, the depth offset in the depth map is acquired in step S406. Since the depth value and the depth offset of the pixel are both obtained, the depth value is modified based on the depth offset in step S408, so as to obtain the first depth value of the pixel on the target object.

In an optional embodiment, the second depth value of the pixel on the character object may be obtained in a following manner. The depth value corresponding to a feature pixel at the target position associated with the character object may be obtained. The depth value corresponding to the feature pixel is determined as the second depth value of each pixel on the character object.

In an optional embodiment, the feature pixel may be, but is not limited to, a pixel selected from pixels covered by the character object. For example, a lowermost pixel on the character object is obtained as the feature pixel, and the depth value of the lowermost pixel is assigned to each pixel on the character object, so that all pixels on the character object have the same depth value. In such case, the second depth value is equal to the depth value of each pixel on the character object.

In an optional embodiment, after the first depth value on the target object and the second depth value on the character object are obtained, rendering may be performed in a following manner. The background image is rendered, where the pixel on the target object in the background image is rendered according to the first depth value. Pixels occupied by the character object in the background image are determined, and a first pixel is obtained from the pixels occupied by the character object in the background image (where each pixel occupied by the character object in the background image may serve as the first pixel). Then, following operations are performed. The first pixel on the character object is rendered based on the second depth value, in a case that the first pixel is determined to be not on the target object. The first depth value and the second depth value are compared at the first pixel, to obtain a comparison result, in a case that the first pixel is determined to be on the target object. The comparison result is configured to indicate a blocking relationship between the target object and the character object. The character object is rendered according to the comparison result.

In an optional embodiment, there may be a blocking relationship between the target object and the character object. During rendering, the target object is rendered first, and the character object is rendered after rendering of the target object is completed. A part of the character object is normally rendered in a case that such part does not overlap with the target object. A part of the character is subject to following determination in a case that such part overlaps with the target object. In a case that the first depth value is less than the second depth value, it indicates that the target object blocks the character object, so that the overlapping part is not further rendered. In a case that the first depth value is greater than the second depth value, it indicates that the character object blocks the target object, so that the overlapping part is normally rendered as the character object.

A process of rendering the character object is illustrated in conjunction with Figure 5. Coordinates of a position of the character object may be different in dimensions from the coordinates in the target image. Therefore, the coordinates of the character object needs to be converted to be compatible with the coordinates in the target image. That is, the coordinates of the character object are converted into the coordinates in the 2D rectangular coordinate system established based on the display screen of the terminal. After a renderer is invoked in step S502 and the coordinates of the character object are obtained in step S504, the coordinates of the character object are converted into coordinates in the 2D rectangular coordinate system established based on the display screen of the terminal in step S506. Then, the depth value of the character object is subject to offset processing based on the coordinates of the character object in step S508, so as to obtain the second depth value. Afterwards, the first depth value is compared with the second depth value in step S510. In a case that the first depth value is greater than the second depth value, the process goes to S512, where the part, which overlaps with the target object, of the character object is rendered. In a case that the first depth value is less than the second depth value, the overlapping part of the character object is not rendered.

The apparatus implementing the following method is provided according to embodiments of the present disclosure. The target image to be rendered for the 2D virtual scene is obtained. The first depth value corresponding to the pixel on the target object in the background image is determined based on the depth offset indicated in the depth map corresponding to the target object. The second depth value corresponding to the pixel on the character object moving to the target display position is obtained. The target image is rendered according to the first depth value and the second depth value. In this method, after the background image is obtained, whether to render the pixel on the character object may be determined according to the first depth value at the target object in the background image and the second depth value of the pixel on the character object. Thereby, it is obvious which layers the character object and the target object are located in the background image, and there is a clear blocking relationship between the character object and the target object. It is ensured that the background image and the character object can still be accurately rendered when there is blockage between the target object in the background image and the character object not belong to the background image, which improves accuracy of the rendering.

In an optional embodiment, the rendering unit 908 includes a first rendering module, a first determination module, a second rendering module, a comparison module, and a third rendering module.

The first rendering module is configured to render the background image. The pixel on the target object in the background image is rendered based on the first depth value.

The first determination module is configured to determine pixels occupied by the character object in the background image, and obtain a first pixel from the pixels occupied by the character object in the background image. Then, the other modules perform following operations.

The second rendering module is configured to render the first pixel on the character object based on the second depth value, in a case the first pixel is determined to be not on the target object.

The comparison module is configured to compare the first depth value and the second depth value at the first pixel to obtain a comparison result, in a case that the first pixel is determined to be on the target object. The comparison result is configured to indicate a blocking relationship between the target object and the character object.

The third rendering module is configured to render the character object according to the comparison result.

An example is illustrated in conjunction with Figure 6. As shown in Figure 6, the target image includes the target object 602 and the character object 604, as an example. During rendering, the background image is first rendered, and pixels in the target object 602 in the background image are rendered based on the first depth value. Then, the character object 604 is rendered according to the second depth value. Each pixel, which overlaps with the target object 602, on the character object 604 serves as the first pixel sequentially, and the first depth value is compared with the second depth value at such pixel. The second depth value is the depth value of such pixel on the character object 604, and the first depth value is the depth value of such pixel on the target object 602. Therefore, a blocking relationship between the character object 604 and the target object 602 may be obtained after the comparison. Figure 6 shows a case in which the second depth value is less than the first depth value, indicating that the pixel in the character object 604 needs to be rendered. In such case, the image presents that the target object blocks the character object at such pixel.

In this embodiment, the character object is rendered according to the first depth value and the second depth value. Thereby, the blocking relationship between the character object and the target object can be clearly obtained in the rendering, improving accuracy of rendering the target image.

In an optional embodiment, the third rendering module includes a first rendering sub-module, and a second rendering sub-module.

The first rendering sub-module is configured to render the first pixel based on the second depth value, in a case that the comparison result indicates the first depth value being greater than the second depth value.

The second rendering sub-module is configured to keep the first pixel not further rendered, in a case that the comparison result indicates the first depth value being less than or equal to the second depth value.

As mentioned when describing Figure 3, a larger ordinate of a pixel indicates a larger depth value of such pixel and a larger stereoscopic distance presented by such pixel. Therefore, when the first depth value and the second depth value are determined and the pixels in the character object are rendered accordingly, the second depth value is applied to rendering of the character object. The pixel in a part at which the character object and the target object overlap serves as the first pixel, and the first depth value of the first pixel and the second depth value of the first pixel are compared with each other. In a case that the first depth value is less than the second depth value, the first pixel is not further rendered, which indicates that the target object blocks the character object at the first pixel. In a case that the first depth value is greater than the second depth value, the first pixel is further rendered, which indicates that the target object does not block the character object at the first pixel.

In this embodiment, whether to render the character object is determined based on the first depth value and the second depth value. Accuracy of rendering the character object is improved, and thereby accuracy of rendering the target image is improved.

In an optional embodiment, the first rendering module includes a first obtaining sub-module and a third rendering sub-module.

The first obtaining sub-module is configured to acquire depth information stored in a depth buffer corresponding to the background image. The depth information corresponding to the pixel on the target object includes the first depth value determined based on the depth offset. The depth information corresponding to a ground pixel presenting a ground in the 2D virtual scene includes a third depth value corresponding to the ground pixel.

The third rendering sub-module is configured to render the background image according to the depth information.

An embodiment is illustrated in conjunction with Figure 3. The target image is obtained, where the target image includes the background image, and the background image includes the target object. A rectangular coordinate system is established based on a screen of a terminal, so that each pixel in the target image has corresponding coordinates. A depth value is set for the each pixel in the target image according to the coordinates. The depth value includes the third depth values of the ground pixels that present the ground, and includes the first depth values of pixels that present the target object, where the first depth values have been subject to depth offset processing. The third depth values and the first depth values are stored into the depth buffer as the depth information. During rendering, the third depth value may be obtained from the depth buffer to render the ground in the target image, and the first depth value may be obtained from the depth buffer to render the target object in the target image.

In this embodiment, the terminal device obtains the depth information in the depth buffer corresponding to the background image, to render the pixels on the target object. Accuracy of rendering the target object is ensured, and thereby the accuracy of rendering the target image is ensured.

In an optional embodiment, the first rendering module further includes a second obtaining sub-module.

The second obtaining sub-module is configured to acquire display coordinates on a screen for each pixel in the background image, and perform following steps sequentially on second pixels in the background image, before the background image is rendered according to the depth information stored in the depth buffer.

A depth of the second pixel is determined based on the display coordinates of the second pixel, where the depth changes along an indicated direction for the depth, and the indicated depth direction is set based on the screen. The depth is determined as an initial depth value of the second pixel.

The initial depth value is stored into the depth buffer as the third depth value, in a case that the second pixel is the ground pixel.

The initial depth value is updated to be the first depth value, and stored into the depth buffer, in a case that the second pixel is the pixel on the target object.

In an optional embodiment, the depth of which the value changes along the indicated depth direction may be, but is not limited to, an ordinate of the second pixel. The ground pixel may be, but is not limited to, a pixel on an image presenting the ground.

For example, after display coordinates of each pixel in the background image is obtained according to the rectangular coordinate system established based on the display screen of the terminal, an initial depth value of such pixel is determined according to the ordinate in the display coordinates. In such case, each pixel in the background image is provided with the initial depth value. The initial depth value is stored in the depth buffer as the third depth value, in a case that the pixel is on the image presenting the ground. The initial depth value is updated to be the first depth value, and the first depth value is stored in the depth buffer, in a case that the pixel is on the target object.

In this embodiment, the initial depth value or the first depth value of a pixel is determined according to a position of the pixel, so as to obtain the depth buffer. Accuracy of obtaining the depth buffer is improved, and thereby accuracy of rendering the target image is improved.

In an optional embodiment, the obtaining unit 906 includes an obtaining module and a second determination module.

The obtaining module is configured to acquire a depth value corresponding to a feature pixel at the target position associated with the character object.

The second determination module is configured to determine the depth value corresponding to the feature pixel as the second depth value of each pixel on the character object.

In an optional embodiment, the depth value corresponding to the feature pixel at the target position associated with the character object may be, but is not limited to, a depth value of a pixel with a smallest ordinate among the character object. An example is illustrated in conjunction with Figure 7. Figure 7 shows the character object 702 in the target image. A lowermost pixel 704-1 of a right foot and a lowermost pixel 704-2 of a left foot of the character object are points with the smallest ordinate among the character object 702. Since the ordinates of the two pixels are equal, a depth value of the lowermost point 704-1 of the right foot or a depth value of the lowermost point 704-2 of the left foot is obtained, and determined as the second depth value of the each pixel on the character object.

In this embodiment, the depth value of the feature pixel is determined as the second depth value of the each pixel on the character object, and thereby whether to render the pixel of the character object can be accurately determined according to the second depth value. Efficiency of rendering the target image is improved.

In an optional embodiment, the apparatus further includes a third determination unit, a fourth determination unit, and a generation unit.

The third determination unit is configured to determine a ground line at which the target object in the background image connects the ground presented in the 2D virtual scene, before the first depth value corresponding to the pixel on the target object in the background image is determined based on the depth offset indicated in the depth map corresponding to the target object.

The fourth determination unit is configured to determine the depth offset of the pixel on the target object, based on a distance of projecting the pixel on the target object onto the ground line.

The generation unit is configured to generate the depth map based on the depth offset.

In an optional embodiment, the depth offset may be, but not limited to, a value greater than or equal to zero.

In an optional embodiment, the ground line may be, but not limited to, a junction line between the target object and the ground. An example is illustrated in conjunction with Figure 8. Figure 8 shows the target object 802, and there are junction lines 804-1 and 804-2 between the target object 802 and the ground. A pixel 806 on the target object is vertically projected onto the ground line at a pixel 808 in the ground line. In such case, the distance of projecting the pixel 806 to the pixel 808 is the depth offset. The depth offset of the each pixel on the target object is obtained, so as to generate the depth map.

In this embodiment, the depth offset is determined based on the distance of projecting the pixel on the target object in the background image onto the ground line. Efficiency and accuracy of generating the depth map is improved, and thereby accuracy of obtaining the first depth value is improved. Accuracy of rendering the target image is improved.

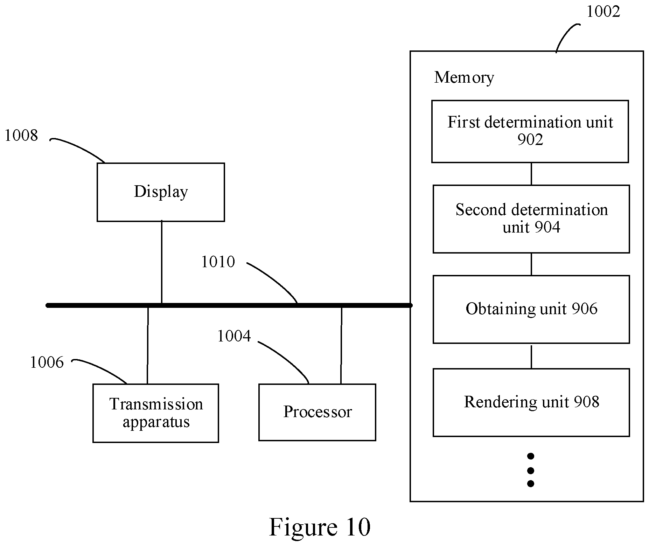

An electronic device is further provided in another aspect of embodiments of the present disclosure, for implementing the foregoing method for rendering the image. Reference is made to Figure 10, which is a schematic structural diagram of an electronic device according to an embodiment of the present disclosure. As shown in Figure 10, the electronic device includes a memory 1002 and a processor 1004. The memory 1002 stores a computer program. The processor 1004 is configured to perform steps in any foregoing method embodiment, through the computer program.

In an optional embodiment, the electronic device may be located in at least one of multiple network devices in a computer network.

In an optional embodiment, the processor may be configured to perform following steps S1 to S4 through the computer program.

In step S1, a target image to be rendered in a 2D virtual scene is obtained. The target image includes a background image and a character object moving in the background image. The background image includes a target object located at a fixed position.

In step S2, a first depth value corresponding to a pixel on the target object in the background image is determined based on a depth offset indicated in a depth map corresponding to the target object. The depth map records a depth offset of each pixel on the target object.

In step S3, a second depth value corresponding to a pixel on the character object moving to a target display position is obtained.

In step S4, the target image is rendered according to the first depth value and the second depth value.

Those skilled in the art may appreciate that the structure as shown in Figure 10 is merely an example. The electronic device may be a terminal device such as a smart phone (for example, an Android mobile phone or an iOS mobile phone), a tablet computer, a palmtop computer, a mobile Internet device (MID), or a PAD. A structure of the foregoing electronic devices is not limited by what is shown in Figure 10. For example, the electronic device may further include more or fewer components (for example, a network interface and a display apparatus) on a basis of what is shown in Figure 10, or have a configuration different from that shown in Figure 10.

The memory 1002 may be configured to store a software program and a module, for example, a program instruction/module corresponding to the method and the apparatus for rendering the image in embodiments of the present disclosure. The processor 1004 performs various functional applications and data processing by running the software program and the module stored in the memory 1002, so as to implement the foregoing method for reconstructing the motion trajectory. The memory 1002 may include a high speed random access memory, and may further include a non-volatile memory, for example, one or more magnetic storage apparatuses, a flash memory, or another non-volatile solid-state memory. In some embodiments, the memory 1002 may further include a memory that is remotely configured for the processor 1004, and the remote memory may be connected to a terminal via a network. Examples of the network include, but are not limited to, the Internet, an intranet, a local area network, a mobile communication network, and a combination thereof. In a specific embodiment, the memory 1002 may, but is not limited to, store the target image, the depth map, the depth information, and the like. As an example shown in Figure 10, the memory 1002 may, but is not limited to, include the first determination unit 902, the second determination unit 904, and the obtaining unit 906, and the rendering unit 908 in the foregoing apparatuses for rendering the image. In addition, the memory may, but is not limited to, further include other modules and units in the foregoing apparatuses for rendering the image. Details are not repeated herein.

In an optional embodiment, a transmission apparatus 1006 is configured to receive or transmit data via a network. A specific example of the network may include a wired network or a wireless network. In an embodiment, the transmission apparatus 1006 includes a network interface controller (NIC). The NIC may be connected to another network device and a router via a network cable, so as to communicate with the Internet or the local network. In an embodiment, the transmission apparatus 1006 is a radio frequency (RF) module, which is configured to communicate wirelessly with the Internet.

In addition, the electronic device further includes a display 1008 and a connection bus 1010. The display 1008 is configured to display a result of the rendering. The connection bus 1010 is configured to connect various module components in the foregoing electronic device.

A storage medium is further provided in another aspect of embodiments of the present disclosure. The storage medium stores a computer program. The computer program is configured to perform steps in any foregoing method embodiment when being executed.

In an optional embodiment, the storage medium may be configured to store the computer program configured to perform following steps S1 to S4.

In step S1, a target image to be rendered in a 2D virtual scene is obtained. The target image includes a background image and a character object moving in the background image. The background image includes a target object located at a fixed position.

In step S2, a first depth value corresponding to a pixel on the target object in the background image is determined based on a depth offset indicated in a depth map corresponding to the target object. The depth map records a depth offset of each pixel on the target object.

In step S3, a second depth value corresponding to a pixel on the character object moving to a target display position is obtained.

In step S4, the target image is rendered according to the first depth value and the second depth value.

In an optional embodiment, the storage medium may be configured to store the computer program configured to perform following steps S1 to S5.

In step S1, the background image is rendered. The pixel on the target object in the background image is rendered based on the first depth value.

In step S2, pixels occupied by the character object are determined in the background image, and a first pixel is obtained from the pixels occupied by the character object in the background image. Then, following operations are performed.

In step S3, the first pixel on the character object is rendered based on the second depth value, in a case the first pixel is determined to be not on the target object.

In step S4, the first depth value and the second depth value are compared at the first pixel to obtain a comparison result, in a case that the first pixel is determined to be on the target object. The comparison result is configured to indicate a blocking relationship between the target object and the character object.

In step S5, the character object is rendered according to the comparison result.

In an optional embodiment, the storage medium may be configured to store the computer program configured to perform following steps S1 and S2.

In step S1, the first pixel is rendered based on the second depth value, in a case that the comparison result indicates the first depth value being greater than the second depth value.

In step S2, the first pixel is not rendered, in a case that the comparison result indicates the first depth value being less than or equal to the second depth value.

In an optional embodiment, the storage medium may be configured to store the computer program configured to perform following steps S1 and S2.

In step S1, depth information stored in a depth buffer corresponding to the background image is acquired. The depth information corresponding to the pixel on the target object includes the first depth value determined based on the depth offset. The depth information corresponding to a ground pixel presenting a ground in the 2D virtual scene includes a third depth value corresponding to the ground pixel.

In step S2, the background image is rendered according to the depth information.

In an optional embodiment, the storage medium may be configured to store the computer program configured to perform following steps S1 to S4.

In step S1, display coordinates on a screen are acquired for each pixel in the background image. Following steps are performed sequentially on second pixels in the background image.

In step S2, a depth of the second pixel is determined based on the display coordinates of the second pixel, where a value of the depth changes along an indicated direction for the depth, and the indicated depth direction is set based on the screen. The depth is determined as an initial depth value of the second pixel.

In step S3, the initial depth value is stored into the depth buffer as the third depth value, in a case that the second pixel is the ground pixel.

In step S4, the initial depth value is updated to be the first depth value, and stored into the depth buffer, in a case that the second pixel is the pixel on the target object.

In an optional embodiment, the storage medium may be configured to store the computer program configured to perform following steps S1 and S2.

In step S1, a depth value corresponding to a feature pixel at the target position associated with the character object is acquired.

In step S2, the depth value corresponding to the feature pixel is determined as the second depth value of each pixel on the character object.

In an optional embodiment, the storage medium may be configured to store the computer program configured to perform following steps S1 to S3.

In step S1, a ground line at which the target object in the background image connects the ground presented in the 2D virtual scene is determined.

In step S2, the depth offset of the pixel on the target object is determined based on a distance of projecting the pixel on the target object onto the ground line.

In step S3, the depth map is generated based on the depth offset.

In these embodiments, those skilled in the art may understand that all or some of the steps of the methods in the foregoing embodiments may be implemented by a program instructing relevant hardware of the terminal device. The program may be stored in a computer-readable storage medium. The storage medium may include a flash disk, a ROM, a RAM, a magnetic disk, an optical disc, and the like.

A computer program product is further provided according to embodiments of the present disclosure. The computer program includes instructions. The instructions, when executed by a computer, configure the computer to perform the foregoing method for rendering the image.

Sequential numbers of the foregoing embodiments of the present disclosure are merely for description purpose and do not indicate preference among the embodiments.

An integrated unit in the foregoing embodiments may be stored in the foregoing computer-readable storage medium, when implemented as a software functional unit and sold or used as an independent product. Based on such an understanding, an essence or a part contributing to conventional technology of technical solutions of the present disclosure, or all or a part of technical solutions, may be implemented as a software product. The computer software product is stored in a storage medium and includes several instructions for instructing one or more computer devices (which may be a personal computer, a server, a network device, or the like) to perform all or some of steps of the methods in embodiments of the present disclosure.

Foregoing embodiments of the present disclosure lay emphasis on different aspects. A part which is not described in detail in one embodiment may refer to relevant description of another embodiment.

The client in some embodiments of the present disclosure may be implemented in other manners. The apparatus embodiments described above are merely exemplary. For example, units are merely divided according to logic functions, and may be divided in other manners in practice. For example, multiple units or components may be combined or integrated into another system, or, some features can be omitted or not performed. In addition, the displayed or discussed coupling, direct coupling, or communication connection may be indirect coupling or communication connection via some interfaces, units, or modules, and may be electrical or in other forms.

The units described as separate parts may or may not be physically separate. Components displayed as units may or may not be physical units, that is, may be located in one position or distributed among multiple network units. Some or all of the units may be selected according to a practical requirement to achieve an objective of solutions in the embodiments.

In embodiments of the present disclosure, all functional units may be integrated into one processing unit, or each functional unit may be physically independent, or two or more units are integrated into one unit. The integrated unit may be implemented as hardware or a software function unit.

Described above are merely exemplary embodiments of the present disclosure. Those skilled in the art may make various improvements and modifications without departing from the principle of the present disclosure, and the improvements and the modifications shall fall within the protection scope of the present disclosure.

## Claims

1. A method for rendering an image, applied to an image processing device, wherein the method comprises:
obtaining a target image to be rendered in a 2D virtual scene, wherein the target image comprises a background image and a character object moving in the background image, and the background image comprises a target object located at a fixed position;
determining a first depth value corresponding to a pixel on the target object in the background image, based on a depth offset indicated in a depth map corresponding to the target object, wherein the depth map records a depth offset of each pixel on the target object;
obtaining a second depth value corresponding to a pixel on the character object moving to a target display position; and
rendering the target image according to the first depth value and the second depth value.

2. The method according to claim 1, wherein rendering the target image according to the first depth value and the second depth value comprises:
rendering the background image, wherein the pixel on the target object in the background image is rendered based on the first depth value;
determining pixels occupied by the character object in the background image, and obtaining a first pixel from the pixels occupied by the character object in the background image;
rendering the first pixel on the character object based on the second depth value, in a case the first pixel is determined to be not on the target object; and
comparing the first depth value and the second depth value at the first pixel to obtain a comparison result, and rendering the first pixel according to the comparison result, in a case that the first pixel is determined to be on the target object, wherein the comparison result is configured to indicate a blocking relationship between the target object and the character object.

3. The method according to claim 2, wherein rendering the first pixel according to the comparison result comprises:
rendering the first pixel based on the second depth value, in a case that the comparison result indicates the first depth value being greater than the second depth value; and
not rendering the first pixel, in a case that the comparison result indicates the first depth value being less than or equal to the second depth value.

4. The method according to claim 2, wherein rendering the background image comprises:
acquiring depth information stored in a depth buffer corresponding to the background image, wherein the depth information corresponding to the pixel on the target object comprises the first depth value determined based on the depth offset, and the depth information corresponding to a ground pixel presenting a ground in the 2D virtual scene comprises a third depth value corresponding to the ground pixel; and
rendering the background image according to the depth information.

5. The method according to claim 4, wherein before rendering the background image according to the depth information stored in the depth buffer, the method further comprises:
acquiring display coordinates on a screen for each pixel in the background image; and
for a second pixel in the background image,
determining a depth of the second pixel based on the display coordinates of the second pixel, wherein the depth changes along an indicated direction for the depth, and the indicated depth direction is set based on the screen, and determining the depth as an initial depth value of the second pixel;
storing the initial depth value into the depth buffer as the third depth value, in a case that the second pixel is the ground pixel; and
updating the initial depth value to be the first depth value, and storing the updated the initial depth value into the depth buffer, in a case that the second pixel is the pixel on the target object.

6. The method according to any one of claims 1 to 5, wherein obtaining the second depth value corresponding to the pixel on the character object moving to the target display position comprises:
acquiring a depth value corresponding to a feature pixel at the target position associated with the character object; and
determining the depth value corresponding to the feature pixel as the second depth value of each pixel on the character object.

7. The method according to any of claims 1 to 5, wherein before determining the first depth value corresponding to the pixel on the target object in the background image, based on the depth offset indicated in the depth map corresponding to the target object, the method further comprises:
determining a ground line at which the target object in the background image connects the ground presented in the 2D virtual scene;
determining the depth offset of the pixel on the target object, based on a distance of projecting the pixel on the target object onto the ground line; and
generating the depth map based on the depth offset.

8. An apparatus for rendering an image, comprising:
a first determination unit, configured to obtain a target image to be rendered in a 2D virtual scene, wherein the target image comprises a background image and a character object moving in the background image, and the background image comprises a target object located at a fixed position;
a second determination unit, configured to determine a first depth value corresponding to a pixel on the target object in the background image, based on a depth offset indicated in a depth map corresponding to the target object, wherein the depth map records a depth offset of each pixel on the target object;
an obtaining unit, configured to obtain a second depth value corresponding to a pixel on the character object moving to a target display position; and
a rendering unit, configured to render the target image according to the first depth value and the second depth value.

9. The apparatus according to claim 8, wherein the rendering unit comprises:
a first rendering module, configured to render the background image, wherein the pixel on the target object in the background image is rendered based on the first depth value;
a first determination module, configured to determine pixels occupied by the character object in the background image, and obtain a first pixel from the pixels occupied by the character object in the background image;
a second rendering module, configured to render the first pixel on the character object based on the second depth value, in a case the first pixel is determined to be not on the target object;
a comparison module is configured to compare the first depth value and the second depth value at the first pixel to obtain a comparison result, in a case that the first pixel is determined to be on the target object, wherein the comparison result is configured to indicate a blocking relationship between the target object and the character object; and
a third rendering module, configured to render the first pixel according to the comparison result.

10. The apparatus according to claim 9, wherein the third rendering module comprises:
a first rendering sub-module, configured to render the first pixel based on the second depth value, in a case that the comparison result indicates the first depth value being greater than the second depth value; and
a second rendering sub-module, configured to keep the first pixel not further rendered, in a case that the comparison result indicates the first depth value being less than or equal to the second depth value.

11. The apparatus according to claim 9, wherein the first rendering module comprises:
a first obtaining sub-module, configured to acquire depth information stored in a depth buffer corresponding to the background image, wherein the depth information corresponding to the pixel on the target object comprises the first depth value determined based on the depth offset, and the depth information corresponding to a ground pixel presenting a ground in the 2D virtual scene comprises a third depth value corresponding to the ground pixel; and
a third rendering sub-module, configured to render the background image according to the depth information.

12. The apparatus according to claim 11, wherein the first rendering module further comprises:
a second obtaining sub-module, configured to acquire display coordinates on a screen for each pixel in the background image, before the background image is rendered according to the depth information stored in the depth buffer;
wherein for a second pixel in the background image, the second obtaining sub-module is further configured to:
determine a depth of the second pixel based on the display coordinates of the second pixel, wherein the depth changes along an indicated direction for the depth, and the indicated depth direction is set based on the screen, and determine the depth as an initial depth value of the second pixel;
store the initial depth value into the depth buffer as the third depth value, in a case that the second pixel is the ground pixel; and
update the initial depth value to be the first depth value, and store the updated the initial depth value into the depth buffer, in a case that the second pixel is the pixel on the target object.

13. The apparatus according to any one of claims 8 to 12, wherein the obtaining unit comprises:
an obtaining module, configured to acquire a depth value corresponding to a feature pixel at the target position associated with the character object; and
a second determination module, configured to determine the depth value corresponding to the feature pixel as the second depth value of each pixel on the character object.

14. A storage medium, storing a program,
wherein the program when being executed performs the method according to any one of claims 1 to 7.

15. An electronic device, comprising a memory and a processor, wherein
the memory stores a computer program, and
the processor is configured to perform the method according to any one of claims 1 to 7 through the computer program.

16. A computer program product, comprising instructions,
wherein the instructions, when executed by a computer, configure the computer to perform the method according to any one of claims 1 to 7.
